# EUROPÄISCHE PATENTSCHRIFT

(11) **EP 3 427 237 B1**
(45) Veröffentlichungstag und Bekanntmachung des Hinweises auf die Patenterteilung: **11.06.2025**
(21) Anmeldenummer: 17700446.2
(22) Anmeldetag: 16.01.2017
(51) Int. Cl.: G07C 9/00, G07B 15/02

(54) **VERFAHREN ZUR KONTROLLE DES ZUGRIFFS AUF ELEKTRONISCH STEUERBARE EINRICHTUNGEN**
METHOD FOR MONITORING ACCESS TO ELECTRONICALLY CONTROLLABLE DEVICES
PROCÉDÉ POUR CONTRÔLER L'ACCÈS À DES DISPOSITIFS POUVANT ÊTRE COMMANDÉS PAR VOIE ÉLECTRONIQUE

(30) Priorität: 11.03.2016 DE 102016104530
(43) Veröffentlichungstag der Anmeldung: 16.01.2019
(73) Patentinhaber: HUF Hülsbeck & Fürst GmbH & Co. KG, 42551 Velbert (DE)
(72) Erfinder: KÄUFER, Uwe, 47055 Duisburg (DE); GENNERMANN, Sven, 42551 Velbert (DE)
(74) Vertreter: Zenz Patentanwälte Partnerschaft mbB
(86) Internationale Anmeldenummer: PCT/EP2017/050818
(87) Internationale Veröffentlichungsnummer: WO 2017/153068

(56) Entgegenhaltungen:
- EP-A1- 1 024 239
- EP-A1- 2 821 972
- EP-A2- 1 562 153
- WO-A1-2011/053357
- WO-A2-2011/109460
- FR-A1- 2 826 394
- US-A1- 2009 251 279
- US-A1- 2014 049 363

## Beschreibung

Die Erfindung betrifft ein System und ein Verfahren für die Kontrolle von Benutzerzugriffen auf elektronisch steuerbare Einrichtungen, insbesondere Fahrzeuge. Insbesondere betrifft die Erfindung ein System und ein Verfahren, bei dem Zugriffsprivilegien auf elektronisch steuerbare Einrichtungen an Individuen verteilt und verwaltet werden können.

Die Verwaltung von Zugriffsrechten oder Benutzungsrechten ist im Bereich der Technik vielerorts zu finden. Beispielsweise gibt es komplexe Rechtehierarchien und -schemata bei der Verwaltung von Zugriffsprivilegien in Computersystemen. Dort wird einem Individuum, welches sich selber dem Computersystem gegenüber durch beispielsweise eine geheime Kennung oder biometrische Daten identifiziert, der Zugriff auf Dienste oder Dateien des Rechnersystems gewährt. Reichen die zugewiesenen Rechte oder Privilegien jedoch nicht aus, um eine angeforderte Aktion durchführen, wird diese durch technische Maßnahmen unterbunden.

Bei Schließsystemen für Fahrzeuge und Gebäude wird zur Zugriffskontrolle häufig ein Schließmittel identifiziert, um den Zugriff auf eine Funktion, beispielsweise einen Zugang zum Fahrzeug oder zum Gebäude zu prüfen. Dabei wird davon ausgegangen, dass der Träger des Schließmittels auch der Berechtigte für die Anforderung der jeweiligen Funktion ist. Entsprechende Konzepte finden sich insbesondere im Bereich der Fahrzeugschließsysteme, insbesondere bei Keyless-Entry- und Keyless-Go-Systemen. Dort führt ein Benutzer einen als ID-Geber bezeichneten Fahrzeugschlüssel mit sich. Dieser ID-Geber enthält codierte Informationen, die einem Fahrzeug gegenüber die Berechtigung des ID-Gebers (nicht unbedingt des Trägers des ID-Gebers) zur Ausübung von Funktionen legitimieren. Wird also der ID-Geber an einen weiteren Benutzer gegeben, so ist dieser ebenfalls in der Lage, mit dem ID-Geber die Fahrzeugfunktionen aufzurufen und zu betätigen.

Im Bereich der Zugangssysteme für Fahrzeuge sind zahlreiche unterschiedliche Verwaltungssysteme bekannt, um Zugriff auf Fahrzeuge zu erlauben. Beispielsweise beschreibt die US 2013/0259232 A1 ein System zur Kopplung oder Paarung (pairing) eines Mobiltelefons mit einem Fahrzeug, um mit dem Mobiltelefon Fahrzeugfunktionen ansteuern zu können.

Die DE 10 2011 078 018 A1 beschreibt ein anderes System zum Ausführen von Fahrzeugfunktionen, wobei eine Telematik-Zentrale einen Teil der Kommunikation mit dem Fahrzeug ausführt.

Die US 2012/0164989 betrifft ein weiteres Verfahren und System für eine drahtlose Schließfunktion eines Fahrzeuges.

Die EP 1 910 134 B1 beschreibt ein System mit einer zentralen Verwaltung, die Datenpakete als Schlüssel an mobile Kommunikationseinrichtungen verteilt.

Das Dokument WO 2007/009453 A2 offenbar ein Rechteverwaltungsverfahren, welches einen zentralen Server zur Rechteverwaltung nutzt.

Die WO 2011/109460 A2 beschreibt Zugangskontrollverfahren zu Ladesäulen und Hotelzimmerschlössern.

Bei bekannten Systemen und Verfahren zur Fahrzeugverwaltung und Vermietung übernimmt eine zentrale Steuerplattform die zentrale Rechteverwaltung und Kontrollfunktion. Die zentrale Steuerplattform wird von einem Vermieter oder sonstigen Verwalter eines Fahrzeugpools betrieben und ist mit Informationen zu Privilegien (Rechten) von identifizierten Benutzern ausgestattet. Diese zentrale Steuerplattform kann beispielsweise durch eine mit einem Datennetz verbundene Datenbank realisiert sein. Über das Datennetz (Internet, Mobilfunknetz etc.) kann eine Kommunikationsverbindung von entfernten Orten zu der zentralen Steuerplattform aufgebaut werden.

Auf Seiten des Fahrzeugs zu welchem ein Zugriff oder die Privilegien-Erteilung geregelt werden soll, ist eine zweite Komponente in Gestalt einer technischen Zugriffs-Steuereinheit vorgesehen, welche den Zugriff auf Funktionen der physischen Einheit beschränken oder freigeben kann. Im Falle eines Fahrzeuges ist also beispielsweise eine Zugriffs-Steuereinheit mit dem Fahrzeugsystem derart gekoppelt, dass die Zugriffs-Steuereinheit Schließfunktionen oder den Motorstart oder sonstige Funktionen gezielt freigeben oder unterbinden kann. Diese Einrichtung kann mit Kommunikationsmitteln für eine drahtlose Kommunikation gekoppelt sein, um mit der zentralen Steuerplattform in Verbindung zu treten und Daten auszutauschen. Diese Kommunikationsmittel umfassen solche Einrichtungen, die eine drahtlose Verbindung über bestehende Kommunikationsnetzwerke erlauben, insbesondere über Mobilfunknetze. Diese Verbindung ist jedoch nicht immer möglich, insbesondere aufgrund von schlechten Bedingungen für einen Kommunikationsaufbau. Da die Erfindung nicht auf diese Möglichkeit der Verbindung angewiesen ist, wird im Weiteren nicht darauf eingegangen.

Als weitere Komponente des Systems und Verfahrens ist eine mobile Kommunikationseinrichtung als Teil des Systems vorgesehen, die ihrerseits sowohl mit der zentralen Steuerplattform als auch der Zugriffs-Steuereinheit an der elektronisch steuerbaren Einrichtung (z.B. einem Fahrzeug) in Kommunikationsverbindung treten kann, um Informationen auszutauschen. Diese mobile Kommunikationseinrichtung kann in einem Smartphone realisiert sein. Die mobile Kommunikationseinrichtung ist mit einer zugehörigen Anwendungssoftware versehen, welche eine Kommunikation mit der zentralen Steuerplattform abwickelt und eine Benutzerinteraktion zulässt. Zwischen der mobilen Zugriffseinrichtung und der Zugriffs-Steuereinheit der elektronisch steuerbaren Einrichtung ist wiederum ebenfalls eine Kommunikationsverbindung herstellbar. Dies geschieht beispielsweise durch eine drahtlose Verbindung gemäß einem drahtlosen Netzwerkstandard, mittels einer Bluetooth-Schnittstelle oder über eine Nahfeld-Kommunikation, z.B. eine NFC-Schnittstelle.

In einem solchen Zugriffsverfahren wird bezüglich der Kommunikation und Datentransporte eine Beziehung aufgebaut, bei der einerseits die zentrale Steuerplattform mit der mobilen Zugriffseinrichtung in Kommunikationsverbindung treten kann und andererseits die mobile Kommunikationseinrichtung mit der Zugriffs-Steuereinheit zum Datenaustausch in Verbindung treten kann. Der Benutzer interagiert dabei mit der mobilen Zugriffseinrichtung.

Eine Zugriffsgewährung läuft z.B. im Rahmen der Anmietung eines Fahrzeugs aus einem Vermieterpool folgendermaßen ab: Unter Steuerung des Nutzers kann die mobile Kommunikationseinrichtung in eine Datenkommunikation mit der zentralen Steuerplattform treten. Dies geschieht z.B. beim Aufrufen einer Applikation von einer Mietwagengesellschaft auf der mobilen Zugriffseinrichtung des Nutzers. Von der zentralen Steuerplattform werden der mobilen Zugriffseinrichtung in einem Dialog Informationen zur Verfügung gestellt, die eine Legitimation gegenüber der Zugriffs-Steuereinheit einer physischen Einheit ermöglichen. Dies kann z.B. ein Zertifikat sein, welches von der zentralen Steuerplattform ausgestellt und signiert wird.

Wenn eine Buchung in der zentralen Plattform erfolgt, wird dies der mobilen Zugriffseinrichtung in einer Antwort bestätigt. Außerdem nimmt die zentrale Steuerplattform über eine separate Verbindung Kontakt zu der Zugriffs-Steuereinheit des gebuchten Fahrzeugs auf und speichert dort die Buchung in der Konfiguration ab.

So sind die mobile Kommunikationseinrichtung und die Zugriffs-Steuereinheit aufeinander vorbereitet. Ein Nutzer kann sich dann mit seiner mobilen Zugriffseinrichtung gegenüber der passenden Zugriffs-Steuereinheit legitimieren, welche in ihrem eigenen Datenbestand die von der zentralen Plattform erhaltenen Daten zur Gegenprüfung der Buchung verwendet.

Die Vermittlung der zentralen Plattform stellt dabei sicher, dass beide Komponenten, nämlich die mobile Kommunikationseinrichtung und die Zugriffs-Steuereinheit des Fahrzeugs, die Buchungsdaten unmittelbar von der zentralen Plattform erhalten. Da die zentrale Steuerplattform vertrauenswürdig ist, ist eine große Sicherheit gewährleistet.

Einige der bekannten Systeme und Verfahren dieser Art, welche einen Zugriff auf technische, elektronisch steuerbare Einrichtungen ermöglichen, haben jedoch Nachteile. So ist es insbesondere bei den Systemen mit zentraler Datenbank zur Rechteverwaltung erforderlich, dass die verwalteten Einrichtungen, zu denen ein Zugriff gewährt oder unterbunden werden soll, über drahtlose Verbindungen erreichbar sind. Dies ist aber nicht immer gewährleistet, z.B. dann, wenn ein Fahrzeug in einer Garage mit beschränkter Empfangsmöglichkeit abgestellt ist oder eine verwaltete Einrichtung nicht über eine jederzeit verfügbare Kopplung mit einem Datentransportnetz verfügt.

Aufgabe der Erfindung ist es, ein sicheres und flexibles System und Verfahren zur Verfügung zu stellen, um jederzeit eine Privilegien-Verwaltung für den Zugriff auf elektronisch steuerbare Einheiten, insbesondere Fahrzeuge, zu ermöglichen.

Diese Aufgabe wird durch ein Verfahren mit den Merkmalen des Patentanspruchs 1 gelöst.

Gemäß der Erfindung werden von der zentralen Plattform nicht nur die für die mobile Zugriffseinrichtung bestimmten Daten zu einer erfolgten Buchung gesendet. Diese Daten sind in der mobilen Zugriffseinrichtung lesbar und an die Zugriffs-Steuereinrichtung übertragbar, wenn der Nutzer die mobile Zugriffseinrichtung mit der Zugriffs-Steuereinrichtung der elektronisch steuerbaren Einrichtung, erfindungsgemäß eines Fahrzeugs, koppelt. Erfindungsgemäß überträgt die zentrale Steuerplattform außerdem wenigstens einen Datencontainer an die mobile Kommunikationseinrichtung, welcher signiert und ggf. verschlüsselt ist und in der mobilen Zugriffseinrichtung nicht veränderbar ist.

Eine Signatur des Datencontainers oder der Daten im Datencontainer durch die zentrale Steuerplattform ist erfindungsgemäß vorgesehen, so dass die Zugriffs-Steuereinheit die Integrität und Herkunft der Daten im Datencontainer verifizieren kann. Eine Manipulation der Daten auf dem Weg zwischen zentraler Steuerplattform und Zugriffs-Steuereinrichtung ist damit unterbunden. Die Signatur durch die zentrale Steuerplattform wird anhand von gespeicherten Zertifikaten in der Zugriffs-Steuereinheit geprüft. Die Zugriffs-Steuereinheit verfügt dazu über gespeicherte Zertifikate. Diese wurden in einer sicheren Umgebung, z.B. Herstellerseitig oder Verwalterseitig gespeichert. Dieses Konzept ist z.B. aus Internet-Browsern bekannt, die bei Installation Informationen zur Verifizierung der Zertifikate von zahlreichen Zertifizierungsstellen mitbringen. Eine Veränderung der Daten ist damit technisch kaum möglich, die Sicherheit sowohl der Integrität der Daten als auch deren Herkunft von der berechtigten zentralen Steuerplattform ist gesichert.

Eine Verschlüsselung der Daten im Container kann insbesondere mit einer symmetrischen oder asymmetrischen Verschlüsselung erfolgen, wobei nur die zentrale Steuerplattform und die Zugriffs-Steuereinheit an der elektronisch steuerbaren Einrichtung über die erforderlichen Schlüssel verfügen. Eine Verschlüsselung erfolgt insbesondere mit einem individuellen Schlüssel der betroffenen Zugriffs-Steuereinrichtung. Die Entschlüsselung ist dann ausschließlich in der adressierten Zugriffs-Steuereinrichtung möglich, zu welcher die zentrale Steuerplattform die Verschlüsselung vorgenommen hat.

Insbesondere kann der Datencontainer mit einem der öffentlichen Schlüssel der Zugriffs-Steuereinheit verschlüsselt sein, so dass diese den Datencontainer nach Erhalt mit einem gespeicherten privaten Schlüssel decodieren kann.

Die mobile Kommunikationseinrichtung wird erfindungsgemäß für diesen Datencontainer als Transportmedium verwendet, ohne dass dieses auf Inhalte des Containers Zugriff hätte. Der Sinn dieser Maßnahme besteht darin, dass in dem unzugänglichen Datencontainer Zugriffsrechte, Buchungsinformationen und sonstige Informationen zur Konfiguration der Zugriffs-Steuereinrichtung transportierbar sind, welche die Zugriffs-Steuereinrichtung ansonsten unmittelbar von der zentralen Plattform erhalten würde. Wenn dieser unmittelbare Empfang jedoch nicht möglich ist, z.B., weil die elektronisch steuerbare Einrichtung nicht mit einem Datenübertragungsnetz gekoppelt ist oder, falls die elektronisch steuerbare Einrichtung ein Fahrzeug ist, das Fahrzeug an einer unzugänglichen Stelle für eine Kommunikation parkt, bringt die mobile Kommunikationseinrichtung die erforderlichen Daten in dem geschützten Container mit. Dabei können in dem geschützten Container Konfigurationsdaten, jedoch auch Programmaktualisierungen enthalten sein.

Sobald die mobile Kommunikationseinrichtung mit der Zugriffs-Steuereinheit der elektronisch steuerbaren Einrichtung koppelt, kann der Container an die Zugriffs-Steuereinheit übertragen werden. Dort wird er entschlüsselt, verifiziert und verarbeitet. In diesem Vorgang werden z.B. die gespeicherten Benutzungsrechte in der Zugriffs-Steuereinheit aktualisiert. Danach kann die Berechtigung des Benutzers, der mit der mobilen Zugriffseinrichtung mit der Zugriffs-Steuereinheit gekoppelt ist, verifiziert werden.

Dieser Vorgang kann für einen Benutzer vollkommen transparent ablaufen. Der Benutzer bucht z.B. über eine Applikation eines Mietwagenanbieters die Nutzung eines Fahrzeugs. Dies geschieht durch Kommunikation der Applikation auf der mobilen Zugriffseinrichtung mit der zentralen Plattform. Nachdem die Buchung geprüft wurde und ein konkretes Fahrzeug zugeteilt ist, prüft die zentrale Steuerplattform die Erreichbarkeit des Fahrzeugs über ein Mobilfunknetz. Ist es erreichbar, wird die Buchungsinformation übertragen. Ist es jedoch nicht erreichbar, so packt die zentrale Steuerplattform die Buchungsinformationen in einen Datencontainer, der mit einem individuellen Schlüssel der Zugriffs-Steuereinheit des Fahrzeugs verschlüsselt wird und signiert diesen. Dieser Datencontainer wird an die mobile Kommunikationseinrichtung des Benutzers zurück übermittelt, zusammen mit der Buchungsbestätigung und lesbaren Buchungsinformationen.

Der Benutzer geht nun mit seinem mobilen Zugriffsgerät zum Fahrzeug und initiiert einen Öffnungsdialog. Wenn in der Zugriffs-Steuereinheit jedoch keine Buchungsinformationen vorhanden sind, da bis zu diesem Zeitpunkt keine Aktualisierung der Buchungsinformationen durch Verbindung mit der zentralen Plattform möglich war, wird in dem Öffnungsdialog der verschlüsselte Container übertragen. Dieser wird in der Zugriffs-Steuereinheit des Fahrzeuges entschlüsselt, wo der private Schlüssel zur Decodierung gespeichert ist.

Die Signatur des Containers oder der darin gespeicherten Daten durch die zentrale Steuerplattform wird, wie oben erläutert, anhand von gespeicherten Zertifikaten geprüft. Die Zugriffs-Steuereinheit verfügt dazu über gespeicherte Zertifikate. Nach erfolgreicher Prüfung des Zertifikats werden die Buchungsinformationen ausgelesen und im System gespeichert. Eine Öffnungsberechtigung des Nutzers kann dann verifiziert werden.

Wesentlich ist, dass zu keiner Zeit Zugriff auf den Inhalt des Datencontainers in der mobilen Zugriffseinrichtung gegeben ist oder dieser Inhalt zumindest nicht veränderbar ist, ohne die Signatur zu zerstören. Der Container wird ausschließlich zum Datentransport verwendet. Dadurch kann auch ohne direkte Verbindung zwischen zentraler Plattform und Zugriffs-Steuereinrichtung eine Aktualisierung der Konfiguration und Programmierung der Zugriffs-Steuereinrichtung erfolgen. So sind Buchungen für Fahrzeuge möglich, welche für die zentrale Steuerplattform unerreichbar sind.

Das beschriebene Verfahren ist nicht nur erfindungsgemäß bei Fahrzeugen anwendbar, sondern, was nicht beansprucht ist, allgemein bei elektronisch steuerbaren physischen Einrichtungen. Dazu können z.B. auch Zugangssysteme von Gebäuden oder Sperrsysteme von anderen Fahrzeugen gehören. Dann ist es möglich, Zugangssysteme mit reduzierter Anbindung an Datentransportnetze über die mobilen Zugriffsmittel von Nutzern zu aktualisieren.

In einer bevorzugten Gestaltung der Erfindung werden von der zentralen Plattform sämtliche Informationen zur Aktualisierung der Informationen der Zugriffs-Steuereinrichtung in den geschützten Datencontainer gepackt. Dies bedeutet, dass einem Benutzer bei einer Buchung an der zentralen Plattform auf seine mobile Kommunikationseinrichtung ein kompletter Satz Daten zur Aktualisierung der Zugriffs-Steuereinrichtung übertragen wird. Die zentrale Steuerplattform prüft dafür bei einer eingehenden Buchung, wann zuletzt unmittelbarer Kontakt mit dem betreffenden Fahrzeug bestand. Daraufhin werden sämtliche Buchungsinformationen und Konfigurationsdaten, welche noch nicht an das Fahrzeug übermittelt wurden (z.B. Stornierungen etc.) in den geschützten Datencontainer gepackt, so dass der Benutzer mit seiner mobilen Zugriffseinrichtung ein vollständiges Update des Fahrzeugs vornimmt, sobald er sich mit der Zugriffs-Steuereinrichtung des Fahrzeugs koppelt. Die Zugriffs-Steuereinrichtung erhält auf diese Weise einen kompletten, aktuellen Rechtesatz für die vorhandenen Buchungen.

Es ist dabei besonders vorteilhaft, wenn der Container auch einen Zeitstempel enthält, so dass bei Übertragung an die Zugriffs-Steuereinrichtung und nach Entschlüsselung bestimmt werden kann, ob ein entschlüsseltes Datenupdate aktueller als ein bereits installiertes Update ist. Dies ist sinnvoll, wenn Updates z.B. an mehrere buchende Nutzer übertragen wurden.

Alternativ oder zusätzlich kann in dem Datencontainer auch eine Nummerierung enthalten sein, welche Auskunft über die chronologische Erstellung der Daten gibt. Damit kann ebenfalls in der Zugriffs-Steuereinheit eine Überprüfung stattfinden, ob gespeicherte Daten aktuell sind oder ob die Daten aus dem Container zur Aktualisierung herangezogen werden sollen. Außerdem kann mit einer solchen Nummerierung ein versehentliches oder böswilliges erneutes Zuspielen der Daten eines bereits verwendeten oder abgelaufenen Containers verhindert werden. In der Zugriffs-Steuereinheit wird die Nummerierung gespeichert, so dass ein bereits angenommener Container nicht ein weiteres Mal akzeptiert wird.

In einer Ausgestaltung der Erfindung wird nach dem Buchen eines Fahrzeuges von der zentralen Plattform versucht, Kontakt mit der mobilen Zugriffseinrichtung aufzunehmen, wenn sich an den Buchungsinformationen für das gebuchte Fahrzeug etwas ändert. Bucht also ein Nutzer ein Fahrzeug für den darauffolgenden Tag, so kann z.B. nach einigen Stunden durch Kommunikation der zentralen Plattform mit einer Applikation auf der mobilen Zugriffseinrichtung eine Aktualisierung des Datencontainers vorgenommen werden, z.B. um weitere Buchungen für die Folgetage an das Fahrzeug zu übermitteln.

Das beschriebene Konzept kann grundsätzlich die unmittelbare Datenübertragung von der zentralen Plattform zu der Zugriffs-Steuereinrichtung ersetzen. Es kann jedoch auch solche Verfahren ergänzen, die erfindungsgemäß im Betrieb zunächst die unmittelbare Übertragung vorsehen und beim Misslingen eine alternative Übertragung über den verschlüsselten Transport auf dem Gerät eines Nutzers vorsehen.

Es ist im Rahmen der Erfindung ebenfalls möglich, einen Transport von Daten auch in der Gegenrichtung, also von der Zugriffs-Steuereinrichtung zur zentralen Steuerplattform vorzusehen. In diesem Fall wird ebenfalls die mobile Zugriffseinrichtung als Transportsystem für die Daten verwendet, wobei die Signatur und ggf. Verschlüsselung in der Zugriffs-Steuereinrichtung vorgenommen wird und die Verifizierung der Signatur und ggf. Entschlüsselung in der zentralen Steuerplattform erfolgt.

Die Erfindung wird nun anhand der beiliegenden Figuren erläutert.

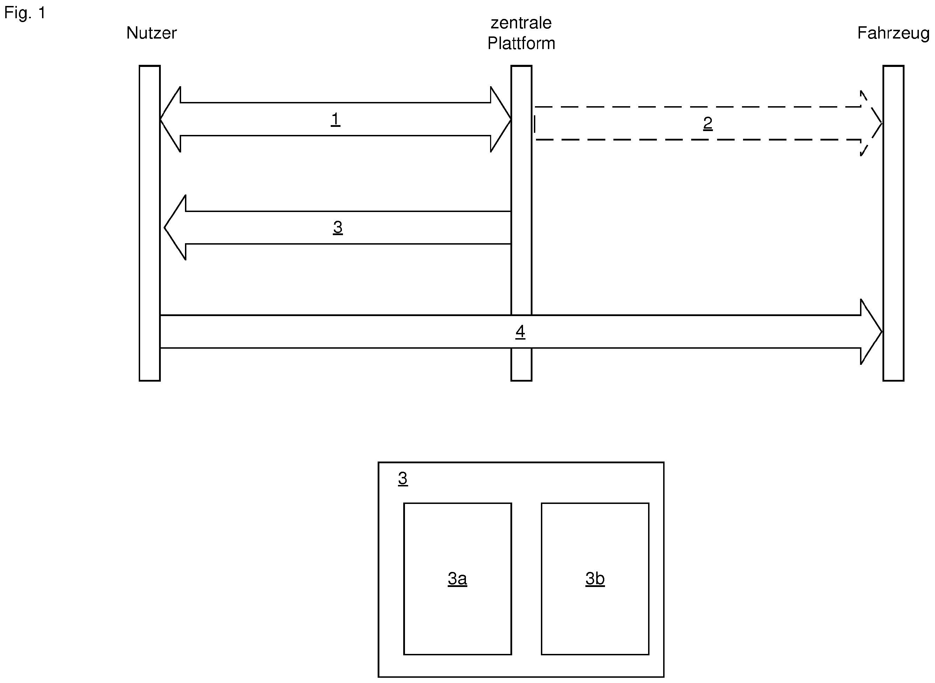

Figur 1 zeigt schematisch den Informationsfluss zwischen einem Nutzer, einer zentralen Verwaltungsplattform und einem Fahrzeug zur Anwendung einer Ausführungsform des erfindungsgemäßen Verfahrens.

In Figur 1 sind die drei Stationen als vertikale Balken gezeigt, welche in dem erfindungsgemäßen Verfahren zum Einsatz kommen.

Der linke vertikale Balken symbolisiert einen Nutzer, der ein Smartphone als mobile Kommunikationseinrichtung bedient. Der mittlere vertikale Balken steht für die zentrale Steuerplattform, welche eine mit dem Internet gekoppelte zentrale Datenbank eines Anbieters von Mietwagen ist. Die zentrale Datenbank verwaltet Fahrzeug-Nutzungsrechte und Berechtigungsinformationen sowie Fahrzeugdaten. Auf dem Smartphone des Nutzers ist eine Applikation installiert, welche von dem Betreiber der zentralen Plattform herausgegeben und autorisiert ist. Diese Applikation ist zur Kommunikation mit der zentralen Plattform ausgebildet.

Die Applikation auf dem Smartphone des Nutzers bietet eine grafische Benutzerschnittstelle, damit der Nutzer in komfortabler Weise Eingaben tätigen und Buchungen in der Fahrzeugflotte des Betreibers der zentralen Plattform vornehmen kann. Außerdem können in der Applikation weitere Funktionen, beispielsweise die Aufnahme und der Abgleich biometrischer Daten für eine Prüfung einer Nutzungsberechtigung vorgesehen sein.

Der rechte vertikale Balken steht für das Fahrzeug mit seiner Zugriffs-Steuereinrichtung. Die Zugriffs-Steuereinrichtung kann in dem Fahrzeug beim Fahrzeugbau als integraler Bestandteil des Steuersystems ausgebildet sein. Es kann sich jedoch auch um eine nachgerüstete Zugriffs-Steuereinrichtung handeln, die mit dem Fahrzeugsteuersystem gekoppelt wird.

Der Nutzer nimmt über die Applikation auf seinem Smartphone Verbindung mit der zentralen Plattform auf, was durch den Pfeil 1 dargestellt ist. Dabei werden dem Benutzer verschiedene Fahrzeuge zur Anmietung angeboten. Der Nutzer wählt ein Fahrzeug zur Nutzungsaufnahme zu einem eingegebenen Zeitpunkt und für eine angegebene Nutzungsdauer aus. Der Nutzer muss gegebenenfalls noch weitere persönliche Identifikationsdaten in die Applikation zur Übermittlung an die zentrale Steuerplattform eingeben, gegebenenfalls auch biometrische Daten wie einen Fingerabdruck oder eine Gesichtsaufnahme. In der zentralen Plattform ist der Nutzer durch einen vorhergehenden Registrierungsvorgang mit seinen Zugriffsrechten gespeichert. Die Einrichtung eines Nutzers in der zentralen Plattform ist nicht Gegenstand der Erfindung und für diese Erfindung auch nicht relevant. Regelmäßig werden zu diesem Zweck vertrauenswürdige Orte und Personen für eine einmalige, unmittelbare Kontrolle des Benutzers und der Einrichtung in dem zentralen System vorgesehen.

Die zentrale Steuerplattform verifiziert die in der Kommunikation 1 erhaltenen Daten. Es wird dabei die grundsätzliche Berechtigung des Nutzers zur Anmietung des gegebenen Fahrzeuges zum gegebenen Zeitpunkt geprüft. Ist diese Prüfung erfolgreich, versucht die zentrale Steuerplattform bei dem Pfeil 2 eine Verbindung zum Fahrzeug aufzunehmen, um in dessen Zugriffs-Steuereinrichtung die Mietdaten und die Berechtigung zu dem Nutzer zu hinterlegen. Dieser Pfeil ist gebrochen dargestellt, da sich das Fahrzeug an einem Ort befindet, der keine Mobilfunkkommunikation erlaubt. Die zentrale Steuerplattform kann also die aktualisierten Buchungsdaten nicht in der Zugriffs-Steuereinrichtung des Fahrzeugs hinterlegen.

Daraufhin werden in der zentralen Plattform die Konfigurationsdaten für die Zugriffs-Steuereinrichtung zu der Buchung des Nutzers in einen Datencontainer gepackt, welcher mit einem der zentralen Plattform bekannten Schlüssel der Zugriffs-Steuereinrichtung des Fahrzeuges verschlüsselt wird. Es ist in diesem Zusammenhang klarzustellen, dass dieser Schlüssel der Zugriffs-Steuereinrichtung nur bezüglich der zentralen Plattform öffentlich ist. Es kann dabei das Konzept einer asymmetrischen Verschlüsselung genutzt werden. Wesentlich ist in diesem Ausführungsbeispiel, dass die Verschlüsselung jederzeit so gewählt wird, dass der Datencontainer auf dem Smartphone des Benutzers unzugänglich bleibt. Entsprechend werden die Schlüssel nur zu dem Zweck der Verschlüsselung eines Datenverkehrs zwischen der fahrzeugseitigen Zugriffs-Steuereinrichtung und der zentralen Plattform verwand und nicht für einen Datenverkehr zwischen Mobiltelefon und Zugriffs-Steuereinrichtung oder Mobiltelefon und zentraler Plattform. Die erforderlichen Schlüssel wurden in der zentralen Plattform bei Ausrüstung des Fahrzeugs mit der Zugriffs-Steuereinrichtung hinterlegt.

Außerdem wird der Datencontainer 3b von der zentralen Plattform signiert, wobei zur Überprüfung der Signatur entsprechende Zertifikate in den Zugriffs-Steuereinheiten gespeichert sind, welche von der zentralen Plattform verwaltet werden.

Der verschlüsselte und signierte Datencontainer 3b wird, zusammen mit lesbaren Daten 3a, in einer gemeinsamen Nachricht 3 an den Nutzer übermittelt. Der Nutzer erhält also ein Datenpaket, in welchem sich ein lesbarer Datenanteil, insbesondere eine Buchungsbestätigung und Kenndaten zur Identifikation der Buchung gegenüber der Zugriffs-Steuereinrichtung befindet. Außerdem ist der Datencontainer 3b übermittelt worden, der in einem Speicherbereich der Applikation auf dem Smartphone des Nutzers hinterlegt wird und unlesbar verschlüsselt bleibt. Eine Einsichtnahme in den Inhalt der Nachricht 3b oder eine Manipulation ist ausgeschlossen, da der Nutzer und das Smartphone nicht über den Schlüssel der Zugriffs-Steuereinrichtung des Fahrzeuges verfügen.

Für den Nutzer kann diese Übermittlung des verschlüsselten Datencontainers 3b völlig transparent erfolgen, da dieser Container regelmäßig nur ein geringes Datenvolumen aufweist. In dem verschlüsselten Container 3b können neben der Buchung des Nutzers auch weitere zukünftige Buchungen für dasselbe Fahrzeug hinterlegt sein.

Der Nutzer bewegt sich nun zu dem Fahrzeug, also in den Bereich, in welchem keine Kommunikation mehr mit der zentralen Plattform möglich ist. Da er sich jedoch im Gegensatz zu der zentralen Plattform dem Fahrzeug annähern kann, kann er eine Kommunikationsverbindung, insbesondere eine Bluetooth-Verbindung mit der Zugriffs-Steuereinrichtung des Fahrzeuges aufbauen und eine Kommunikation einleiten. Mit der Nachricht 4 werden die Daten aus den Datenpaketen 3a und 3b an das Fahrzeug, genauer an dessen Zugriffs-Steuereinrichtung übermittelt. Die lesbaren Daten 3a dienen der Identifikation der Buchung, über welche das Fahrzeug jedoch noch nicht informiert wurde, da die Nachricht 2 es nicht erreichen konnte.

Die Zugriffs-Steuereinrichtung prüft die Signatur des erhaltenen Containers. Dies geschieht anhand von gespeicherten Zertifikat Informationen. Diese sind in der Zugriffs-Steuereinrichtung bei Herstellung des Fahrzeugs oder zu einem späteren Zeitpunkt in einer sicheren Umgebung hinterlegt. Das Konzept der Prüfung eines Zertifikats ist in der Technik, z.B. im Bereich der Internet-Browser, hinreichen bekannt. Kann die Integrität oder der Ursprung des Containers nicht erfolgreich verifiziert werden, wird der Container verworfen. Ein Zugriff auf das Fahrzeug ist dann nur mit den bereits zuvor in der Zugriffs-Steuereinheit gespeicherten Daten möglich.

Bei erfolgreicher Prüfung der Signatur entschlüsselt diese daraufhin mit dem gespeicherten Schlüssel den Datencontainer 3b, welcher die aktualisierten Buchungsdaten enthält. Diese werden in der Zugriffs-Steuereinrichtung im zugehörigen Speicher abgelegt, in welchem die Buchungsdaten des Fahrzeuges abrufbar hinterlegt sind. Anschließend wird erneut die Verifikation der aktuellen Buchung anhand der lesbaren Daten 3a durchgeführt, beispielsweise eine Buchungs-Identifikationsnummer. Die Buchung kann nun verifiziert werden und dem Nutzer wird Zugriff auf das Fahrzeug gewährt.

Der Datencontainer 3b kann auch weitere Buchungsdaten oder sonstige Stornierungsdaten und auch Programmierungsdaten enthalten, welche von der Zugriffs-Steuereinrichtung im Fahrzeug als authentisch erkannt werden. Nur wenn die Daten mit einem zu der Fahrzeug-Steuereinrichtung passenden Schlüssel verschlüsselt wurden und auch nur dann, wenn diese von der zentralen Plattform signiert wurden, ist ein Umprogrammieren der Zugriffs-Steuereinrichtung im Fahrzeug zulässig.

Das erfindungsgemäße Verfahren erlaubt es, Buchungsdaten in Zugriffs-Steuereinrichtungen von Fahrzeugen zu aktualisieren, auch wenn diese für eine Kommunikation über ein Kommunikationsnetzwerk mit der zentralen Plattform nicht zugänglich sind. Dabei werden Konfigurationsdaten oder Daten zur Programmierung der Zugriffs-Steuereinrichtung über ein Mobilfunkgerät transportiert, welches ausschließlich als Transportmedium ohne Zugriff auf die gespeicherten Daten verwendet wird.

## Patentansprüche

1. Verfahren zur Kontrolle des Zugriffs auf eine elektronisch steuerbare Einrichtung, wobei die elektronisch steuerbare Einrichtung ein Fahrzeug ist, aufweisend die Schritte:
Erstellen einer Kommunikationsverbindung zwischen einer mobilen Kommunikationseinrichtung und einer zentralen Steuerplattform über ein Kommunikationsnetzwerk,
Erstellen einer Buchung für eine elektronisch steuerbare Einrichtung in der zentralen Steuerplattform und Übertragen von ersten Daten zu der Buchung von der zentralen Steuerplattform an die mobile Kommunikationseinrichtung, wobei die Daten als Zugriffsinformationen für einen Zugriff auf die elektronisch steuerbare Einrichtung und zur Verarbeitung in der mobilen Kommunikationseinrichtung ausgebildet sind,
wobei zusätzlich zweite Daten von der zentralen Steuerplattform an die mobile Kommunikationseinrichtung in einem Datencontainer übertragen werden, wobei die zweiten Daten Buchungsinformationen enthalten, wobei die zweiten Daten vor der Übertragung in der zentralen Plattform signiert werden und mit einem individuellen Schlüssel verschlüsselt werden, wobei der individuelle Schlüssel einer Zugriffs-Steuereinheit in der elektronisch steuerbaren Einrichtung zugeordnet ist und wobei die verschlüsselten zweiten Daten in der mobilen Kommunikationseinrichtung gespeichert werden, wobei zu keiner Zeit Zugriff auf den Inhalt des Datencontainers in der mobilen Kommunikationseinrichtung gegeben ist oder dieser Inhalt zumindest nicht veränderbar ist, ohne die Signatur zu zerstören,
die mobile Kommunikationseinrichtung für einen Zugriff auf die elektronisch steuerbare Einrichtung mit dem der Zugriffs-Steuereinheit der elektronisch steuerbaren Einrichtung drahtlos gekoppelt wird, wobei wenigstens die zweiten Daten und wenigstens eine Untermenge der ersten Daten an die Zugriffs-Steuereinheit übertragen werden,
die Zugriffs-Steuereinheit die zweiten Daten entschlüsselt und eine Signatur der zweiten Daten prüft und bei erfolgreicher Prüfung eine Konfiguration der Zugriffs-Steuereinheit in Abhängigkeit von den entschlüsselten Daten angepasst wird, wobei nach erfolgreicher Prüfung der Signatur der zweiten Daten die Buchungsinformationen ausgelesen werden und im System gespeichert werden, woraufhin eine Öffnungsberechtigung des Nutzers dann verifiziert werden kann und mit den aktualisierten Buchungsinformationen die Buchung anhand der ersten Daten verifiziert wird und dem Nutzer dem Zugriff auf die elektronisch steuerbare Einrichtung gewährt wird, wobei im Betrieb zunächst eine unmittelbare Datenübertragung von der zentralen Steuerplattform zu der Zugriffs-Steuereinheit erfolgt und im Fall des Misslingens alternativ die Übertragung über den verschlüsselten Transport auf der mobilen Kommunikationseinrichtung erfolgt.

2. Verfahren nach Anspruch 1, wobei in den zweiten Daten außer den Daten einer Buchung der mobilen Kommunikationseinrichtung außerdem Informationen zu weiteren Buchungsvorgängen zu derselben elektronisch steuerbaren Einrichtung verschlüsselt werden.

3. Verfahren nach einem der vorangehenden Ansprüche, wobei in den zweiten Daten ein Zeitstempel zum Zeitpunkt der Verschlüsselung enthalten ist und wobei die Zugriffs-Steuereinheit die Konfiguration der Zugriffs-Steuereinheit nur dann anpasst, wenn der Zeitstempel anzeigt, dass die verschlüsselten Daten aktueller sind als die vorhandene Konfiguration der Zugriffs-Steuereinheit.

4. Verfahren nach einem der vorangehenden Ansprüche, wobei die zentrale Steuerplattform nach dem Erstellen der Buchung und vor dem Zugriff auf die elektronisch steuerbare Einrichtung mit Hilfe der mobilen Kommunikationseinrichtung eine Verbindung mit mobilen Kommunikationseinrichtung herstellt und die verschlüsselten zweiten Daten durch aktualisierte verschlüsselte Daten ersetzt.

## Claims

1. A method of controlling access to an electronically controllable device, wherein the electronically controllable device is a vehicle, comprising the steps of:
Establishing a communication link between a mobile communication device and a central control platform via a communication network,
Creating a booking for an electronically controllable device in the central control platform and transmitting first data for the booking from the central control platform to the mobile communication device, the data being in the form of access information for access to the electronically controllable device and for processing in the mobile communication device,
whereby
additionally, second data is transmitted from the central control platform to the mobile communication device in a data container, wherein the second data contains booking information, wherein the second data is signed in the central platform prior to transmission and encrypted with an individual key, wherein the individual key is assigned to an access control unit in the electronically controllable device, and wherein the encrypted second data is stored in the mobile communication device,
whereby access to the content of the data container in the mobile communication device is not possible at any time, or at least this content cannot be changed without destroying the signature,
the mobile communication device for accessing the electronically controllable device is wirelessly coupled to the access control unit of the electronically controllable device, wherein at least the second data and at least a subset of the first data are transmitted to the access control unit,
the access control unit decrypts the second data and checks a signature of the second data and, if the check is successful, a configuration of the access control unit is adapted as a function of the decrypted data, the booking information being read out and stored in the system after the signature of the second data has been successfully checked, whereupon an opening authorization of the user can then be verified and with the updated booking information the booking is verified on the basis of the first data and the user is granted access to the electronically controllable device, whereby in operation initially a direct data transmission from the central control platform to the access control unit takes place and in the event of failure alternatively the transmission takes place via the encrypted transport on the mobile communication device.

2. Method according to claim 1, wherein in the second data, in addition to the data of a booking of the mobile communication device, information on further booking processes for the same electronically controllable device is also encrypted.

3. Method according to any one of the preceding claims, wherein the second data includes a timestamp at the time of encryption and wherein the access control unit adjusts the configuration of the access control unit only if the timestamp indicates that the encrypted data is more recent than the existing configuration of the access control unit.

4. Method according to one of the preceding claims, wherein the central control platform establishes a connection with the mobile communication device after the booking has been created and before the electronically controllable device is accessed with the aid of the mobile communication device and replaces the encrypted second data with updated encrypted data.

## Revendications

1. Procédé de contrôle d'accès à un dispositif à commande électronique, dans lequel le dispositif à commande électronique est un véhicule, comprenant les étapes consistant à :
Établir une liaison de communication entre un dispositif de communication mobile et une plate-forme de commande centrale via un réseau de communication,
Création d'une réservation pour un dispositif à commande électronique dans la plate-forme de commande centrale et transmission de premières données relatives à la réservation de la plate-forme de commande centrale au dispositif de communication mobile, les données étant conçues comme des informations d'accès pour un accès au dispositif à commande électronique et pour un traitement dans le dispositif de communication mobile,
où
en outre, des deuxièmes données sont transmises de la plate-forme de commande centrale au dispositif de communication mobile dans un conteneur de données, les deuxièmes données contenant des informations de comptabilisation, les deuxièmes données étant signées avant la transmission dans la plate-forme centrale et étant cryptées avec une clé individuelle, la clé individuelle étant associée à une unité de commande d'accès dans le dispositif à commande électronique et les deuxièmes données cryptées étant stockées dans le dispositif de communication mobile,
l'accès au contenu du conteneur de données dans le dispositif de communication mobile n'étant à aucun moment donné, ou du moins ce contenu ne pouvant pas être modifié sans détruire la signature,
le dispositif de communication mobile est couplé sans fil à celui de l'unité de commande d'accès du dispositif à commande électronique pour accéder au dispositif à commande électronique, au moins les deuxièmes données et au moins un sous-ensemble des premières données étant transmis à l'unité de commande d'accès,
l'unité de commande d'accès décrypte les deuxièmes données et vérifie une signature des deuxièmes données et, en cas de vérification réussie, une configuration de l'unité de commande d'accès est adaptée en fonction des données décryptées, les informations de comptabilisation étant lues et enregistrées dans le système après vérification réussie de la signature des deuxièmes données, après quoi une autorisation d'ouverture de l'utilisateur peut alors être vérifiée et, avec les informations de comptabilisation actualisées, la comptabilisation est vérifiée à l'aide des premières données et l'accès au dispositif à commande électronique est accordé à l'utilisateur, sachant qu'en fonctionnement, il y a d'abord une transmission directe des données de la plate-forme de commande centrale à l'unité de commande d'accès et qu'en cas d'échec, il y a alternativement une transmission via le transport crypté sur le dispositif de communication mobile.

2. Procédé selon la revendication 1, dans lequel, dans les deuxièmes données, outre les données d'une écriture du dispositif de communication mobile, des informations concernant d'autres opérations d'écriture vers le même dispositif à commande électronique sont en outre cryptées.

3. Procédé selon l'une des revendications précédentes, dans lequel un horodatage au moment du cryptage est contenu dans les deuxièmes données et dans lequel l'unité de commande d'accès adapte la configuration de l'unité de commande d'accès uniquement si l'horodatage indique que les données cryptées sont plus récentes que la configuration existante de l'unité de commande d'accès.

4. Procédé selon l'une quelconque des revendications précédentes, dans lequel la plate-forme de commande centrale, après avoir créé l'écriture et avant d'accéder au dispositif à commande électronique, établit une connexion avec le dispositif de communication mobile à l'aide du dispositif de communication mobile et remplace les deuxièmes données cryptées par des données cryptées mises à jour.
